# FASCICULE DE BREVET EUROPEEN

(11) **EP 3 636 481 B1**
(45) Date de publication et mention de la délivrance du brevet: **26.01.2022**
(21) Numéro de dépôt: 19200962.9
(22) Date de dépôt: 02.10.2019
(51) Int. Cl.: B60L 53/16, H01R 13/00

(54) **DISPOSITIF DE DÉCOUPLAGE AUTOMATIQUE D'UN CONNECTEUR INSÉRÉ DANS UNE PRISE D'UN VÉHICULE ÉLECTRIQUE**
AUTOMATISCHE ENTKOPPELUNGSVORRICHTUG EINES IN EINE STECKDOSE EINES ELEKTROFAHRZEUGS EINGESTECKTEN STECKVERBINDERS
DEVICE FOR AUTOMATICALLY DECOUPLING A CONNECTOR INSERTED IN A SOCKET OF AN ELECTRIC VEHICLE

(30) Priorité: 08.10.2018 FR 1859288
(43) Date de publication de la demande: 15.04.2020
(73) Titulaire: ALSTOM Transport Technologies, 93400 Saint-Ouen (FR)
(72) Inventeur: CHAGNY, Christian, 93400 SAINT OUEN (FR)
(74) Mandataire: Lavoix

(56) Documents cités:
- EP-A2- 3 309 908
- WO-A1-2018/083287
- US-A1- 2014 021 915
- US-A1- 2018 201 145
- US-B1- 9 685 734

## Description

L'invention a pour domaine celui des véhicules électriques et plus particulièrement celui des moyens de recharge d'un véhicule électrique à une station de recharge fixe.

Il est connu de recharger les moyens de stockage d'énergie embarqués à bord d'un véhicule électrique (tel que des batteries ou des supercapacités) par connexion directe à une station de recharge fixe au sol, au moyen d'un câble d'alimentation.

L'extrémité libre du câble est munie d'un connecteur destiné à être inséré dans une prise conjuguée, dont est muni le véhicule électrique.

Le standard IEC 62196 définit ainsi les caractéristiques générales des connecteurs (partie mâle) et prise (partie femelle) des moyens de connexion pour la recharge des véhicules électriques à partir d'une station de recharge.

La recharge par câble nécessite l'intervention d'un opérateur (par exemple le conducteur du véhicule électrique) à la fois pour connecter le câble au véhicule électrique, c'est-à-dire pour insérer le connecteur dans la prise préalablement à la recharge, et pour déconnecter le câble, c'est-à-dire découpler le connecteur de la prise à l'issue de la recharge.

Or, il est fastidieux d'avoir à déconnecter manuellement le câble, notamment une fois que les batteries du véhicule électrique sont rechargées et que le véhicule peut repartir. Le conducteur qui attend la fin de la recharge à l'intérieur de son véhicule souhaiterait ne pas à avoir à en redescendre pour déconnecter le câble lorsqu'il souhaite repartir.

Le document US 2018/201145 A1 divulgue un système constitué d'une prise mâle et d'une prise femelle pour la recharge par câble d'un véhicule électrique, qui intègre un un mécanisme d'éjection. Cependant, il ne peut s'adapter facilement aux connecteurs et prises existants.

Le document WO2018083287A1 divulgue un dispositif de découplage automatique des moyens de connexion d'un véhicule électrique à une station de recharge par câble, les moyens de connexion comportant un connecteur, côté câble de la station de recharge, et une prise, côté véhicule électrique, le dispositif de découplage comportant une partie active montée sur la prise et une partie passive montée sur le connecteur, la partie active comportant un actionneur et une pluralité de tiges formant poussoirs propres à être translatés par l'actionneur pour venir en appui de la partie passive du dispositif de découplage de manière à générer une force pour séparer le connecteur de la prise.

L'invention a donc pour but de résoudre ce problème.

Pour cela l'invention a pour objet un dispositif de découplage automatique conforme aux revendications annexées.

L'invention et ses avantages seront mieux compris à la lecture de la description détaillée qui va suivre de deux modes de réalisation particuliers, donnés uniquement à titre d'exemples illustratifs et non limitatifs, la description étant faite en se référant aux dessins annexés sur lesquels :
- la figure 1 est une représentation générale d'un véhicule électrique connecté par un câble à une station de recharge ;
- les figures 2 et 3 représentent, en vue de face et en en vue de côté respectivement, la partie côté connecteur d'un dispositif selon un premier mode de réalisation de l'invention ;
- les figures 4 et 5 représentent, en vue de face et en coupe axiale respectivement, la partie côté véhicule électrique du dispositif selon le premier mode de réalisation de l'invention ;
- les figures 6 et 7 représentent, en vue de face et en en vue de côté respectivement, la partie côté connecteur d'un dispositif selon un second mode de réalisation de l'invention ; et,
- la figure 8 est une représentation sous forme de blocs d'un procédé d'utilisation d'un dispositif selon l'invention.

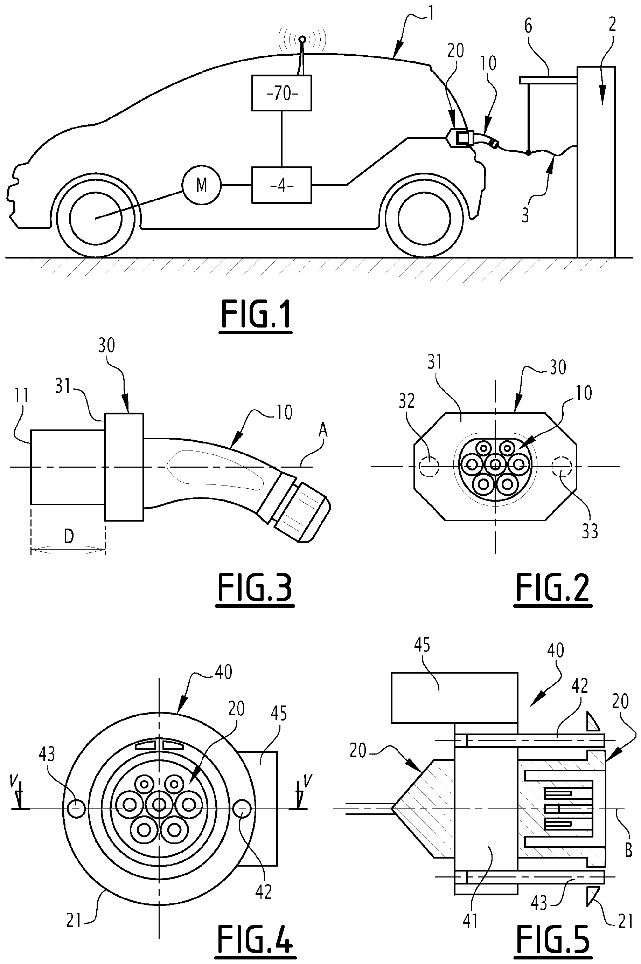

En se référant à la figure 1, un véhicule électrique 1 est parqué à proximité d'une station de recharge 2 de manière à ce qu'un câble 3 d'alimentation, appartenant à la station de recharge 2, puisse être branché sur le véhicule électrique 1 de manière à permettre la recharge des moyens de stockage d'énergie embarquée du véhicule 1 (tel que des batteries 4). Les batteries 4 permettent d'alimenter les moyens de traction du véhicule électrique 1, tels qu'un moteur électrique M.

Plus spécifiquement, l'extrémité libre du câble 3 est munie d'un moyen de connexion propre à être couplé à un moyen de connexion conjugué prévu sur la caisse du véhicule électrique 1.

Par exemple, dans le mode de réalisation représenté sur les figures, l'extrémité libre du câble 3 est munie d'un connecteur 10 destiné à être inséré dans une prise 20 prévue sur le véhicule électrique 1. De préférence, conformément aux standards en vigueur pour la recharge des véhicules électriques, le connecteur 10 est de type mâle et la prise 20 est du type femelle.

Selon l'invention, les moyens de connexion sont équipés d'un dispositif qui lorsqu'il est actionné permet de découpler automatiquement le connecteur 10 de la prise 20.

Il est à noter que, pour éviter que le connecteur 10 tombe au sol une fois découplé de la prise 20, la station de recharge 3 est avantageusement munie d'une potence 6 à laquelle est suspendu le câble 3.

Selon l'invention, le dispositif de découplage est monté sur les moyens de connexion, mais n'est pas intégré à l'ensemble prise mâle - prise femelle. Dit autrement, selon l'invention, le dispositif de découplage est rapporté sur les moyens de connexion et n'en fait pas partie.

Dans un premier mode de réalisation représenté aux figures 2 à 5, le dispositif de découplage comporte une partie passive 30, côté connecteur 10, et une partie active 40 côté prise 20.

Plus précisément, comme représenté sur les figures 2 et 3, la partie passive 30 est constituée d'une bague, montée sur connecteur 10. La partie passive 30 présente une surface avant plane 31, perpendiculaire à l'axe A du connecteur 10 et orientée vers la prise 20 en position couplée du connecteur sur la prise. La surface avant 31 se trouve en retrait d'une distance D de la face avant 11 du connecteur 10. La surface avant 31 délimite des zones d'appui 32, 33 de part et d'autre du connecteur 10.

Comme représenté sur les figures 4 et 5, la partie active 40 du dispositif est constituée d'un corps 41, monté sur la prise 20 de manière à l'enserrer.

La partie active 40 comporte un actionneur 45, qui est monté solidaire du corps 41.

Le corps 41 est muni d'une pluralité de tiges formant poussoirs. Les tiges sont disposées symétriquement et régulièrement à la périphérie de la prise 20. Sur les figures 3 et 4 le corps 41 comporte deux tiges 42 et 43.

Les tiges 42 et 43 sont montées parallèlement à l'axe B de la prise 20. Elles sont montées mobiles en translation par rapport au corps 41.

Les tiges 42 et 43 sont mises en mouvement par l'actionneur 45 lorsque ce dernier est déclenché. Elles se déplacent alors en translation parallèlement à l'axe B.

Les tiges peuvent ainsi passer d'une position rentrée vers une position sortie. Dans la portion rentrée, l'extrémité des tiges ne fait pas saillie au-delà de la collerette 21 définissant la face avant de la prise 20. Dans la position sortie, l'extrémité des tiges fait saillie au-delà de la collerette 21, de préférence d'une distance D.

Alors que le connecteur 10 est couplé à la prise 20, l'extrémité des tiges 42 et 43 est propre à venir en contact de la surface 31 de la bague portée par le connecteur 10 et à appliquer une pression sur les zones 32 et 33 respectivement.

La force appliquée par les tiges sur la partie passive du dispositif de découplage au cours de leur déplacement permet d'extraire le connecteur 10 de la prise 20.

Une fois le connecteur 10 découplé de la prise 20, les tiges 42 et 43 sont de préférence rétractées au-delà de la face avant de la prise 20, notamment pour permettre le couplage d'un connecteur pour la prochaine recharge.

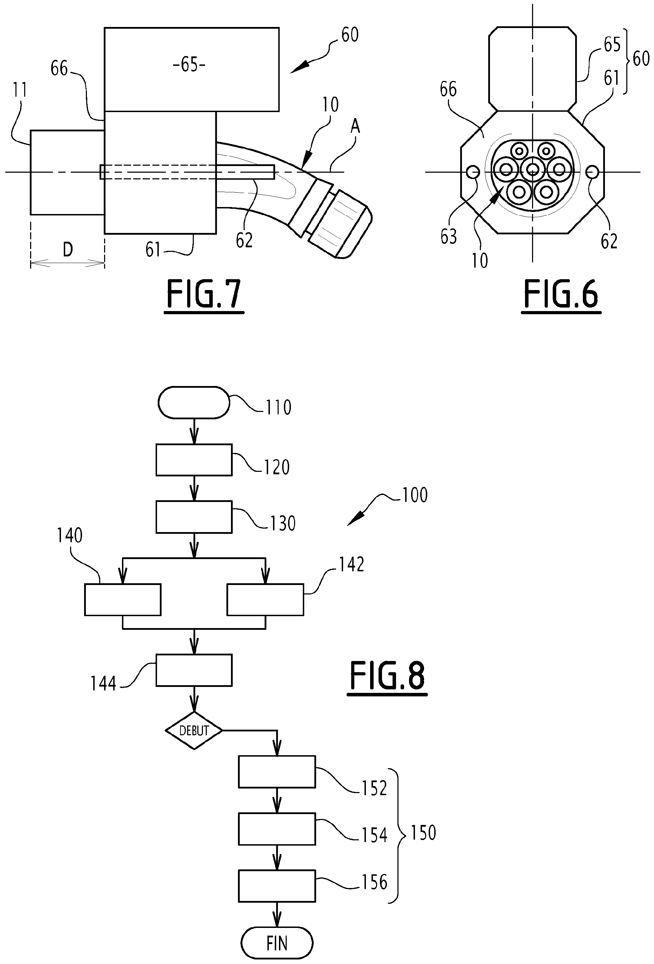

En se référant maintenant aux figures 7 et 8, un second mode de réalisation du dispositif de découplage selon l'invention va être présenté, dans lequel la partie active 60 est côté connecteur 10, tandis que la partie passive se trouve côté prise 20.

La partie active 60 comporte un corps 61 formant bague autour du connecteur 10 et un actionneur 65 solidaire du corps 61.

Le corps 61 comporte des tiges, par exemple deux tiges 62 et 63.

Ces tiges, dont l'axe est parallèle à l'axe A du connecteur 10, sont montées sur le corps 61 de manière à être mobiles en translation selon l'axe A.

Les tiges sont entrainées en translation par l'actionneur 65 entre une position rentrée et une position sortie. Dans la portion rentrée, l'extrémité des tiges 62, 63 ne fait pas saillie au-delà de la surface avant 66 du corps 60. Dans la position sortie, l'extrémité des tiges fait saillie au-delà de la face avant 66, par exemple d'une distance D permettant de garantir l'extraction totale du connecteur 10 hors de la prise 20.

Côté prise 20, la partie passive du dispositif est de préférence simplement constituée par la collerette définissant la périphérie de la face avant de la prise 20. Cette collerette constitue une surface d'appui pour les tiges dont est munie la partie active 60.

Ainsi, l'actionneur 65 est propre, lorsqu'il est commandé, à déplacer en translation les tiges 62 et 63 de manière à ce que leurs extrémités viennent en appui de la partie passive du dispositif er génèrent sur le connecteur 10 une force de réaction permettant d'extraire le connecteur 10 hors de la prise 20.

Pour commander l'actionneur, il est prévu une unité de commande 70 à bord du véhicule 1.

Avantageusement, l'unité de commande 70 est reliée à la batterie 4 de manière à en déterminer l'état de charge. Lorsque le dispositif 70 détermine que l'état de charge de la batterie 4 est supérieur à un seuil prédéterminé, par exemple 95% de la charge maximale que la batterie peut emmagasiner, l'unité de commande 70 émet un signal de découplage du dispositif de découplage de manière à commander la déconnexion automatique des moyens de connexion.

Avantageusement, la liaison entre l'unité de commande 70 et le dispositif de découplage est une liaison sans fil présentant l'avantage de permettre un déclenchement à distance du dispositif de découplage. Une telle liaison sans fil est en particulier utile dans le cas où l'actionneur n'est pas positionné sur le véhicule comme illustré par le mode de réalisation des figures 6 et 7. Dans le cas d'un mode de réalisation dans lequel l'actionneur est positionné sur le véhicule, mode de réalisation illustré sur les figures 2 à 5, l'unité 70 commande de préférence directement, par exemple au travers d'une liaison filaire dédiée, l'actionneur 45.

En se référant à la figure 8, la mise en œuvre du dispositif de découplage des figures 6 et 7 va être présentée.

A l'étape 110, le conducteur du véhicule électrique 1 gare son véhicule à proximité immédiate d'une station de recharge 3 afin de recharger les batteries 4 du véhicule 1.

A l'étape 120, le conducteur, qui est descendu du véhicule 1, saisit le connecteur 10 équipant l'extrémité du câble 3 de la station de recharge 1 et l'insère dans la prise 20 dont est équipé le véhicule 1.

Une fois la connexion électrique établie entre le véhicule 1 et la station de recharge 3, la recharge des moyens de stockage d'énergie peut débuter (étape 130).

A l'étape 140, il est détecté que les batteries 4 sont rechargées et l'unité de commande 70 émet un signal de découplage à destination de l'actionneur 65.

En variante, c'est le conducteur qui, estimant que la recharge des moyens de stockage d'énergie est suffisante, contrôle l'unité de commande 70 pour qu'elle émette le signal de découplage.

A l'étape 144, la recharge des batteries 4 est stoppée en plaçant notamment la station de recharge 3 en sécurité.

A l'étape 150, le procédé de découplage proprement dit est mise en œuvre.

A l'étape 152, l'unité 70 émet le signal de découplage.

A l'étape 154, sur la réception de ce signal de découplage, l'actionneur 65 est déclenché de manière à translater les tiges 62 et 63 formant poussoirs et les faire passer de la position rentrée vers la position sortie.

A l'étape 156, les tiges en mouvement prennent appui sur la partie passive du dispositif de manière à extraire le connecteur 10 de la prise 20.

Après une certaine durée d'actionnement correspondant à un parcours maximum des tiges, le connecteur 10 est découplé de la prise 20. Avantageusement, la réalisation effective du découplage peut être confirmée par l'analyse des signaux présents sur le connecteur 20 côté véhicule.

Avantageusement, l'actionneur 65 est enclenché de manière à translater les tiges 62 et 63 de la position sortie vers la position rentrée.

Le découplage est donc fini et le véhicule est mécaniquement indépendant du câble 3. Le véhicule 1 peut donc repartir.

L'homme du métier constatera que le dispositif qui vient d'être présenté constitue un système de déconnexion à faible coût, puisqu'il s'adapte facilement aux connecteurs et prises existants.

Ce dispositif de découplage permet de déconnecter le câble de recharge d'un véhicule électrique (autonome ou avec un conducteur) de façon motorisée et sans intervention d'un opérateur.

Dans les modes de réalisation venant d'être présentés, il a été décrit que le moyen mécanique permettant d'extraire le connecteur de la prise est constitué par une tige formant poussoir.

## Revendications

1. Dispositif de découplage automatique des moyens de connexion d'un véhicule électrique (1) à une station de recharge (2) par câble (3), les moyens de connexion comportant un connecteur (10), côté câble de la station de recharge, et une prise (20), côté véhicule électrique, le dispositif de découplage comportant une partie active (40 ; 60) montée sur la prise et une partie passive (30) montée sur le connecteur, la partie active comportant un actionneur (45 ; 65) et une pluralité de tiges (42, 43 ; 62, 63) formant poussoirs propres à être translatés par l'actionneur pour venir en appui de la partie passive du dispositif de découplage de manière à générer une force pour séparer le connecteur (10) de la prise (20), **caractérisé en ce que** la partie passive (30) est constituée d'une bague montée sur le connecteur (10), et la partie active (40) est constituée d'un corps (41) monté sur la prise (20) de manière à l'enserrer.

2. Dispositif de découplage automatique des moyens de connexion d'un véhicule électrique (1) à une station de recharge (2) par câble (3), les moyens de connexion comportant un connecteur (10), côté câble de la station de recharge, et une prise (20), côté véhicule électrique, le dispositif de découplage comportant une partie active (40 ; 60) montée sur le connecteur et une partie passive (30) montée sur la prise, la partie active comportant un actionneur (45 ; 65) et une pluralité de tiges (42, 43 ; 62, 63) formant poussoirs propres à être translatés par l'actionneur pour venir en appui de la partie passive du dispositif de découplage de manière à générer une force pour séparer le connecteur (10) de la prise (20), **caractérisé en ce que** la partie active (60) comporte un corps (61) formant une bague autour du connecteur (10), et la partie passive est constituée par une collerette définissant une périphérie d'une face avant de la prise (20).

3. Dispositif de découplage selon la revendication 1 ou la revendication 2, dans lequel l'actionneur de la partie active (40 ; 60) est déclenché lors de la réception d'un signal de découplage émis par une unité de commande (70).

4. Dispositif de découplage selon la revendication 3, dans lequel une liaison entre l'unité de commande (70) et le dispositif de découplage est une liaison sans fil.

## Patentansprüche

1. Automatische Entkopplungsvorrichtung von Verbindungseinrichtungen eines Elektrofahrzeugs (1) an einer Ladestation (2) über ein Kabel (3), die Verbindungseinrichtungen umfassend einen kabelseitigen Stecker (10) der Ladestation und eine fahrzeugseitige Steckdose (20) des Elektrofahrzeugs, die Entkopplungsvorrichtung umfassend einen aktiven Teil (40; 60), der an der Steckdose montiert ist, und einen passiven Teil (30), der an dem Stecker montiert ist, der aktive Teil umfassend ein Stellglied (45; 65) und eine Vielzahl von Stiften (42, 43; 62, 63), die Stößel bilden, die geeignet sind, um durch das Stellglied verschoben zu werden, um an dem passiven Teil der Entkopplungsvorrichtung in Anlage zu kommen, um eine Kraft zu erzeugen, um den Stecker (10) von der Steckdose (20) zu trennen, **dadurch gekennzeichnet, dass** der passive Teil (30) aus einem Ring besteht, der an dem Stecker (10) montiert ist, und der aktive Teil (40) aus einem Körper (41) besteht, der an der Steckdose (20) montiert ist, um diese zu umschließen.

2. Automatische Entkopplungsvorrichtung von Verbindungseinrichtungen eines Elektrofahrzeugs (1) an einer Ladestation (2) über ein Kabel (3), die Verbindungseinrichtungen umfassend einen kabelseitigen Stecker (10) der Ladestation und eine fahrzeugseitige Steckdose (20) des Elektrofahrzeugs, die Entkopplungsvorrichtung umfassend einen aktiven Teil (40; 60), der an dem Stecker montiert ist, und einen passiven Teil (30), der an der Steckdose montiert ist, der aktive Teil umfassend ein Stellglied (45; 65) und eine Vielzahl von Stiften (42, 43; 62, 63), die Stößel bilden, die geeignet sind, um durch das Stellglied verschoben zu werden, um an dem passiven Teil der Entkopplungsvorrichtung in Anlage zu kommen, um eine Kraft zu erzeugen, um den Stecker (10) von der Steckdose (20) zu trennen, **dadurch gekennzeichnet, dass** der aktive Teil (61) einen Körper (61) umfasst, der einen Ring um den Stecker (10) bildet, und der passive Teil aus einem Bund besteht, der einen Umfang einer Vorderseite der Steckdose (20) definiert.

3. Entkopplungsvorrichtung nach Anspruch 1 oder 2, wobei das Stellglied des aktiven Teils (40; 60) beim Empfang eines Entkopplungssignals ausgelöst wird, das von einer Steuereinheit (70) ausgegeben wird.

4. Entkopplungsvorrichtung nach Anspruch 3, wobei eine Verbindung zwischen der Steuereinheit (70) und der Entkopplungsvorrichtung eine drahtlose Verbindung ist.

## Claims

1. A device for automatically decoupling means for connecting an electric vehicle (1) to a recharging station (2) by cable (3), the connection means including a connector (10), on the cable side of the recharging station, and a socket (20), on the electric vehicle side, the device including an active part (40; 60) mounted on the socket and a passive part (30) mounted on the connector, the active part including an actuator (45; 65) and a plurality of rods (42, 43; 62, 63) forming plungers capable of being translated by the actuator to bear on the passive part of the device so as to generate a force in order to separate the connector (10) from the socket (20), characterise in that the passive part (30) is made up of a ring mounted on the connector (10), and the active part (40) is made up of a body (41) mounted on the socket (20) so as to grip it.

2. A device for automatically decoupling means for connecting an electric vehicle (1) to a recharging station (2) by cable (3), the connection means including a connector (10), on the cable side of the recharging station, and a socket (20), on the electric vehicle side, the device including an active part (40; 60) mounted on the connector and a passive part (30) mounted on the connector, the active part including an actuator (45; 65) and a plurality of rods (42, 43; 62, 63) forming plungers capable of being translated by the actuator to bear on the passive part of the device so as to generate a force in order to separate the connector (10) from the socket (20), characterise in that the active part (60) includes a body (61) forming a ring around the connector (10), and the passive part is made up of a collar defining a periphery of a front face of the socket (20).

3. The device according to claim 1 or claim 2, wherein the actuator of the active part (40; 60) is triggered when a decoupling signal is received that is emitted by a control unit (70).

4. The device according to claim 3, wherein a connection between the control unit (70) and the decoupling device is a wireless connection.
